# EUROPEAN PATENT APPLICATION

(11) **EP 2 230 432 A2**
(43) Date of publication of application: **22.09.2010**
(21) Application number: 10250474.3
(22) Date of filing: 15.03.2010
(51) Int. Cl.: F16L 11/08, F16L 11/133, F16L 33/01

(54) **Hose end fitting**

(30) Priority: 16.03.2009 GB 0904498
(71) Applicant: BPP Technical Services Ltd., London, EC2V 5DE (GB)
(72) Inventor: Ong, Chuon-Szen, Bromley, London SE26 5LG (GB)
(74) Representative: Curtis, Philip Anthony

(57) **Abstract**

An end fitting (40) for a hose (10), the hose (10) comprising an inner portion (100) and an outer portion (102). The end fitting (40) comprises: an inner sleeve (42) adapted to be placed within the inner portion (100) of the hose (10); an external vault (44) adapted to extend around the outside of the inner portion (100) of the hose (10); a hose clamp (48) adapted to clamp the hose (10) between the clamp and the inner sleeve (42); a sealing member (46) adapted to provide a seal between the inner portion (100) of the hose (10) and the inner sleeve (42) and external vault (44); a seal activating member (54) capable of being pressed against the sealing member (46) to increase the sealing effect of the sealing member (46); and retaining means (44d,44e) adapted to retain the outer portion of the hose; the arrangement being such that when an axial tension is applied to the outer portion (102) of the hose (10), said outer portion (102) can press against the seal activating member (54) to press said seal activating member (54) against the sealing member (46) and thereby increase said sealing effect.

## Description

This invention relates to a hose end fitting. More particularly, the invention relates to an end fitting for hose suitable for conveying industrial fluids on a large scale, such as conveying oil and/or gas and/or liquefied gas from an oil and/or gas reservoir; conveying oil and /or gas and/or liquefied gas to or from an oil or gas storage facility; or conveying oil and/or gas and/or liquefied gas around a petroleum refinery. The hose may also be suitable for fluid transfers in marine environments in a floating or aerial configuration, and for the transfer of fluids between water-borne vessels or between water-borne vessels and land based terminals.

The hose is suitable for conveying fluids at extreme temperatures, such as elevated temperatures, such as above 100°C, or even above 250°C; or low temperatures, including cryogenic temperatures, such as below 0°C, below -100°C, or even below -250°C. The hose according to the invention is also useful for conveying corrosive fluids.

It is well known to use hose for the large scale transport of fluids. There are primarily three types of conventional hose available for this purpose:
1. Rubber hose, which comprises layers of rubber material reinforced with steel.
2. Bellows hose, which comprises a corrugated layer and a reinforcing layer (see, for example, US2004112454).
3. Composite hose, which comprises a flexible tubular layer disposed between inner and outer helical supporting coils (see for example EP0076540 and WO01/96772).

In order to terminate the hose an end fitting is required. The aim of the present is to provide an improved end fitting for use with hose.

According to one aspect of the present invention there is provided an end fitting for a hose, the hose comprising an inner portion and an outer portion, the end fitting comprising: an inner sleeve adapted to be placed within the inner portion of the hose; an external vault adapted to extend around the outside of the inner portion of the hose; a hose clamp adapted to clamp the hose between the clamp and the inner sleeve; a seal member adapted to provide a seal between the inner portion of the hose, the inner sleeve and the external vault; a seal activating member capable of being pressed against the seal member to increase the sealing effect of the sealing member; and retaining means adapted to retain the outer portion of the hose; the arrangement being such that when an axial tension is applied to the outer portion of the hose, said outer portion can press against the seal activating member to press said sealing activating member against the sealing member and thereby increase said sealing effect.

In a preferred embodiment, the seal activating member is disposed between the hose clamp and the external vault. The seal activating member preferably has a surface which is arranged such that the outer portion of the hose is arranged in contact with said surface, the arrangement being such that when an axial tension is applied to the outer portion of the hose, said portion presses against said surface to push the seal activating member into contact with the seal member. Desirably, said surface of the seal activating member is at an angle to the direction in which the seal activating member presses against the seal member. Said angle is preferably from 30° to 60°, most preferably about 45°.

The seal activation member preferably works in such a way that it can compress the sealing member in a direction substantially parallel to the hose axis, thereby causing the sealing member to compress in a radial direction relative to the hose.

The inner sleeve is preferably made from a metal, most preferably a metal with a low coefficient of thermal expansion. Most preferably the inner sleeve is made of Invar, for example, Invar-36.

The external vault, the hose clamp and the seal activating member are preferably made of metal, most preferably the same metal. Stainless steel is suitable, particularly 316L stainless steel.

The seal activating member preferably presses against the sealing member in a direction parallel with the hose axis.

The external vault may constitute the tail end of the end fitting. Thus, the preferable structure is that the external vault is disposed nearest to the end of the hose, and the seal activating member and the hose clamp are disposed on the hose further from the hose end than the external vault.

The retaining means for the hose outer portion preferably includes an elongate support, preferably in the form of a pin. In an alternative, the elongate support may be in the form of a ring adapted to extend around part or all of the circumference of the hose. The outer portion of the hose may be wound around the elongate support. The outer portion may be wound round the elongate support once, twice, three times, four times, or more.

The retaining means preferably includes two cooperating retaining members adapted to retain the outer portion of hose therebetween. The retaining members may have corrugated formations thereon which mate with one another to retain the hose between the corrugations. One or both of the retaining members may form part of the external vault of the end fitting. Preferably, one of the retaining members is integral with the external vault.

It is preferred that the arrangement is such that the outer portion of the hose is divided into a plurality of distinct strands, each of which is retained individually by the retaining means. The retaining means may be disposed at discrete intervals around the external vault, with each strand of the hose outer portion being retained by a respective part of the retaining means. The strands may be pleated, or twisted or braided.

The end fitting according to the invention may be used with a wide variety of different hose, including rubber and composite hose.

In a particularly advantageous embodiment, the end fitting is used to terminate one or both ends of a hose comprising:
(i) an inner portion comprising an elongate supporting member arranged along the length of the hose, the supporting member having a plurality of coils arranged in a substantially helical configuration; and a tubular reinforcing/sealing layer disposed around the supporting member; and
(ii) an outer portion comprising at least a reinforcing layer.

The supporting member may be made of any suitable material, such as steel, or a polymer material; the preferred material is stainless steel. The supporting member is preferably in the form of a wire.

It is a specific feature of the hose that there is only one coiled supporting member in the hose, i.e., a second coil, which is present in composite hose, is not present.

The hose inner portion preferably further comprises a coil retaining means adapted to prevent coils of the supporting member from moving apart relative to one another. Most preferably, the arrangement is such that the coil retaining means prevents immediately adjacent coils from moving relative to one another to cause hose collapse. Movement of adjacent coils relative to one another is allowed within the confines of operational flexibility of the hose, but the crossing over or direct contact of one coil by an adjacent coil is prevented.

In its most basic form, the coil retaining means simply comprises a retaining material which is secured to one coil of the supporting means and also secured to another, preferably adjacent, coil of the supporting means, the arrangement being such that the length of the retaining material between the coils is substantially the same as the desired spacing between the two coils, so that if a force is applied to move the coils apart, the retaining material goes into tension to prevent the coils moving apart. It follows that the retaining material should be strong enough to withstand the forces which, in use, would act to move the coils apart, and should be highly resistant to stretching. It is preferred that the retaining material is flexible and is made from materials compatible with the supporting member and the transported fluid.

In a preferred embodiment, the coil retaining means comprises an elongate strip of retaining material arranged to follow the coils. The retaining material is folded around the coils, and the side edges of the retaining material are secured to a part of the retaining material that is folded around another coil of the support member. This serves to prevent the two coils from moving apart relative to one another. The retaining material can be secured by any convenient means, such as by adhesive, by stitching and so on.

The retaining means folded around one coil is preferably secured to the retaining means around an immediately adjacent coil, but this is not essential, i.e., the retaining means could instead be secured to the retaining means around a non-adjacent coil.

The coil retaining means is preferably a flexible fabric suitable for the intended product use. Suitable examples include fabric made from UHMWPE such as Dyneema which is the current fabric, but any fabric that has the mechanical properties and flexibility can be considered, such as fabrics from aramid-based polymers, polyesters such as PET, molecularly aligned polymers, etc.

The tubular reinforcing/sealing layer preferably comprises a plurality of discrete layers, which will now be described. Each layer can be made up of several wraps of the materials used in each layer, for example, 2, 3, 4 or more wraps.

In a preferred embodiment, a first, internal, reinforcing layer is disposed around, and adjacent to, the underlying layer (which is preferably the supporting member and retaining means, which are together known as the 'carcass'). The first reinforcing layer is preferably wound around the supporting member and retaining means (the "carcass"), most preferably in a spiral configuration. Most preferably, the first reinforcing layer comprises a plurality of strips of material wound around the supporting member. The first reinforcing layer is preferably a fabric, more preferably a woven fabric. The first reinforcing layer may be made of a material compatible with the hose application. For example, the first reinforcing layer may be made of a UHMWPE, such as Dyneema; an aramid-based polymer; a polyester, such as PET; molecularly aligned polymers; and so on. The first reinforcing layer provides reinforcement for the hose structure and additionally provides abrasion protection for other layers (particularly the sealing layer described below) from the supporting member. The lay angle for these strips will be as is appropriate for the materials and intended application. This angle could be between 1 and 89 degrees from the hose axis. A lay angle of from 5° to 30° of the hose axis is preferred.

The first reinforcing layer provides reinforcement for the hose structure and additionally provides abrasion protection for other layers (particularly the sealing layer described below) from the supporting member. The lay angle for these strips will be as is appropriate for the materials and intended application. This angle could be from 1 to 89 degrees from the hose axis. A lay angle of from 5° to 30° from the hose axis is preferred.

In a preferred embodiment, a sealing layer is disposed around, and adjacent to, the underlying layer (which is preferably the first reinforcing layer). The sealing layer is preferably wound around the first reinforcing member, most preferably in a spiral configuration. Most preferably the sealing layer comprises a plurality of strips of material wound around the first reinforcing layer. The sealing layer is preferably formed of a polymeric material, such as a thermoplastic fluoropolymer, for example, fluorinated ethylene propylene. Thus, the sealing layer most preferably comprises a plurality of thermoplastic strips spirally wound around the first reinforcing member. The sealing layer functions essentially along the principles of the well-known labyrinth seal concept. The sealing layer prevents fluid flow therethrough, thereby ensuring that the fluid is constrained to flow within the hose. In many embodiments, the sealing layer also serves as a pressure barrier. The lay angle for these strips will be as is appropriate for the materials and intended application. This angle could be from 1° to 89°, preferably 40° to 50° from the hose axis.

In a preferred embodiment, a second, outer, reinforcing layer is disposed around, and adjacent to, the underlying layer (which is preferably the sealing layer). The second reinforcing layer is preferably wound around the sealing layer, most preferably in a spiral configuration. Most preferably the second reinforcing layer comprises a plurality of strips of material wound around the sealing layer. The second reinforcing layer is preferably a fabric, more preferably a woven fabric. The second reinforcing layer may be made of a material compatible with the hose application. For example, the second reinforcing layer may be made of a UHMWPE, such as Dyneema; an aramid-based polymer; a polyester, such as PET; molecularly aligned polymers; and so on.

The second reinforcing layer may be made of the same material as the first reinforcing layer and may have substantially the same structure. The lay angle for these strips will be as is appropriate for the materials and intended application. This angle could be from 1° to 89°, preferably 50° to 80° from the hose axis.

In a preferred embodiment, a binding fabric layer is disposed around, and adjacent to, the underlying layer (which is preferably the second reinforcing layer). The binding fabric layer comprises fabric strips that are spirally wound around the second reinforcing layer at a very steep angle, to prevent lateral sliding of the outermost part of the windings of the second reinforcing layer. The binding fabric layer strips are preferably about half as wide as the width of the underlying strips.

In another embodiment, the binding layer may consist of fabric cord, metallic cord or polymer cord. The lay angle for these strips will be as is appropriate for the materials and intended application. This angle could be from 1° to 89°, preferably 55° to 85° from the hose axis.

In a preferred embodiment, an insulating layer is disposed around, and adjacent to, the underlying layer (which is preferably the binding fabric layer). The insulating layer may comprise strips of polymer and/or fabric which are spirally wound around the underlying layer. The purpose of the insulating layer is to provide heat insulation between the underlying layers and the external part of the hose, therefore the material should have good insulating properties.

Instead of the insulating layer, or in addition to it, there may also be a buoyancy layer disposed around the underlying layer (which may be the binding fabric layer or the insulating layer). The buoyancy layer comprises strips of a low density material spirally wound around the underlying layer. The buoyancy layer preferably has a density lower than the density of water and of the other layers, to help the hose float in water.

In a preferred embodiment, the outer portion of the hose includes a further reinforcing layer, which is disposed around the inner portion of the hose. The purpose of the further reinforcing layer is to provide an abrasion resistant exterior for the hose and/or to provide axial strengthening. In an embodiment, the further reinforcing layer may be a braid.

Thus, in the preferred embodiment, it is the further reinforcing layer, or, in a preferred embodiment, the braid, which is retained by the retaining means of the end fitting.

The hose used in the invention according to the invention may be made in any suitable length. The hose is preferably relatively large bore, and typically has an internal diameter of at least 50mm, more usually at least 100mm, at least 200mm or at least 300mm. The upper diameter may be, for example, 500mm or 600mm.

The end fitting according to the invention

Reference is now made to the accompanying drawings, in which:
Figure 1 is a cross-sectional view through the wall of an embodiment of hose which may be terminated using an end fitting according to the invention; and
Figure 2 is a cross-sectional view of an end fitting according to the invention.

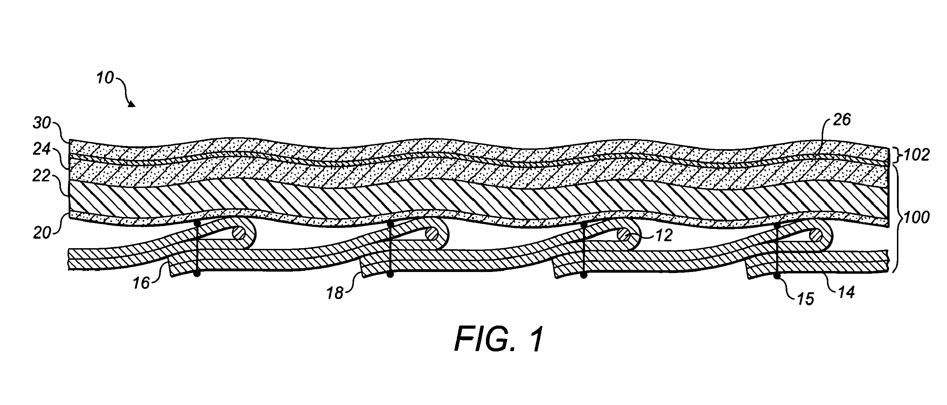

With reference to Figure 1, a hose is generally designated 10. It will be appreciated that the structure of the hose is cylindrical, and the drawing shows a cross-section of the hose wall structure.

The hose comprises an inner portion 100 comprising layers 12, 14, 20, 22, 24, and 26 and an outer portion 102 comprising layer 30. These layers will be described in more detail below.

The inner portion 100 includes an inner helical supporting member 12. The purpose of the supporting member 12 is to provide strength and rigidity to the hose structure and also to support the other layers described below.

The inner portion 100 further includes a coil retaining means 14, which is an elongate strip of retaining material arranged to follow the coils of the supporting member 12. The retaining material 14 is folded around the coils, and the side edges 16 and 18 of the retaining material 14 are secured to a part of the retaining material that is folded around another coil of the supporting member, for example by stitching 15. This serves to prevent the two coils from moving apart relative to one another. The supporting member and the retaining material 14 together form the hose carcass.

A first reinforcing layer 20 is disposed around the supporting member 12 and retaining means 14 (the "carcass"). The first reinforcing layer 20 comprises a plurality of strips of flexible fabric, spirally wound around the supporting member 12.

A sealing layer 22 is disposed around the first reinforcing layer 20. The sealing layer 22 comprises strips of thermoplastic, spirally wound around the first reinforcing layer 20, whereby the sealing layer 22 provides an effective fluid barrier preventing the passage of fluids thereacross.

A second reinforcing layer 24 is disposed around the sealing layer 22. The second reinforcing layer 24 comprises a plurality of strips of flexible fabric, spirally wound around the sealing layer 22.

A binding fabric layer 26 is disposed around the second reinforcing layer 24. The binding fabric layer 26 comprises narrow fabric strips that are spirally wound around the second reinforcing layer 24 at a very steep angle, to prevent lateral sliding of the outermost part of the windings of the second reinforcing layer 24 and all the layers beneath.

An insulating layer (not shown) may be disposed around the binding fabric layer 26. The insulating layer comprises strips of polymer and/or fabric which are spirally wound around the binding fabric layer 26.

Instead of the insulating layer, or in addition to it, there may also be a buoyancy layer (not shown) disposed around the underlying layers.

As mentioned above, the hose includes an outer portion 102, which comprises a further reinforcing layer 30, disposed around the insulating layer or the buoyancy layer (if present), or the binding fabric layer 26.

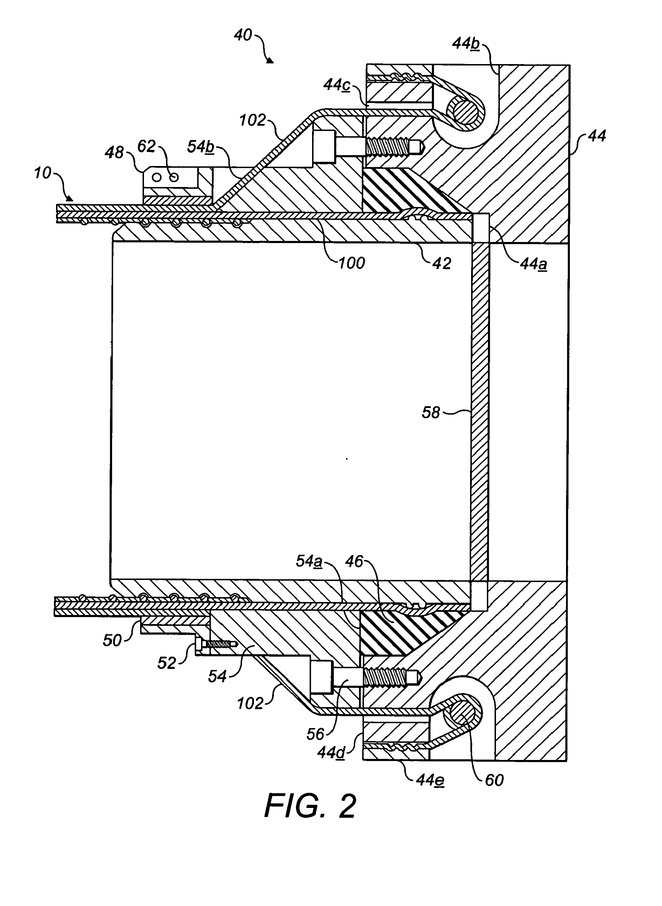

Referring to Figure 2, an end fitting is designated 40. The end fitting 40 provides a termination for the hose 10.

The end fitting 40 comprises an inner sleeve 42, which extends within the hose 10, and provides a support for the hose inner portion 100. The end fitting 40 further comprises an external vault 44, which is arranged such that it encases the inner sleeve 42, hose 10 and a sealing member 46. The external vault 44 also provides the termination tail of the end fitting 40.

A sealing member 46, which is in the form of a sealing ring, is disposed between the external vault 44 and the hose inner portion 100, to provide a seal therebetween. The preferred material for the sealing member is PTFE, or glass-reinforced PTFE.

A hose clamp 48 is disposed around the hose 10 and the inner sleeve 42. The hose clamp comprises multiple distinct sections 50 that are secured together into a ring using clamp assembly bolts 62. Clamp locking bolts 52 are used to secure the hose clamp 48 to a seal activating member 54, in the form of a collar. The hose clamp 48 serves to clamp the entire hose 10 (inner and outer portions 100 and 102) to the inner sleeve 42.

The seal activating member 54 is disposed between the hose clamp 48 and the external vault 44. It is bolted to the external vault by means of a bolt 56. A surface 54a of the seal activating member 54 abuts against the sealing member 46. The sealing member 46 is made of a material which presses into contact with the hose inner portion 100 and the external vault 44 when the surface 54a presses against the sealing member. The seal activating member has a further surface 54b, which will be described below.

An isolation ring 58 is provided between the tail end of the inner sleeve 42 and a shoulder 44a of the external vault 44. The isolation ring 58 provides additional sealing between the inner sleeve 42 and the external vault 44. The isolation ring may be made of cryogenically compatible material such as UHMWPE or PTFE, or a metallic alloy such as INVAR 36 or stainless steel. The isolation ring also serves to maintain or eliminate electrical continuity between the hose and the end fitting, depending on requirement and application.

The external vault 44 is provided with recesses 44b, which are shown as a U-shaped recess in the drawings, but other shapes are also suitable. The recesses 44b are circumferentially spaced around the external vault 44. Typically there are 6 or 8 recesses 44b spaced around the external vault 44.

In an alternative embodiment, there may be a single recess 44b, which extends circumferentially around a major part of, or the entire, circumference of the external vault 44.

Each recess 44b is provided with an elongate support in the form of a capstan pin 60. The capstan pin 60 is arranged substantially perpendicularly to the hose axis.

The external vault 44 includes a plurality of slots 44c, which extend into the recesses 44b. Preferably each recess 44b has a single respective slot 44c adjacent to it.

The external vault 44 further includes a retaining means which comprises two retaining members 44d and 44e. The inner retaining member 44d is an integral part of the external vault 44 and has a outer corrugated surface. The outer retaining member 44e is separate from the rest of the external vault 44, and has a corrugated inner surface configured to mate with the corrugations on the outer surface of the inner retaining member 44d. The outer retaining member is bolted to the inner member and clamps the outer portion of the hose between them.

The outer hose portion 102 is separated from the inner hose portion 100 after it has been clamped by the hose clamp 48. The outer portion 102 is then divided into a plurality of discrete strands, the number of which would normally correspond to the number of the recesses 44b. Each strand is formed about its axis into an elongate shape which is then laid over the surface 54b of the seal activating member 54, and passed through a respective one of the apertures 44c in the external vault 44.

The outer hose portion is then wrapped around the capstan pin 60, preferably four times, then clamped between the retaining members 44d and 44e.

In operation, when the hose 10 is subjected to axial tension, the outer hose portion 102 presses against the surface 54b of the seal activating member 54. This imparts a force on the seal activating member 54, driving it into engagement with, and thereby activating, the sealing member 46. As the surface 54a of the seal activating member 54 is driven into engagement with the sealing member 46, the sealing member 46 is compressed longitudinally and therefore tends to compress radially. This causes the sealing member 46 to press more strongly against the inner hose portion 100 and the inner surface of the external vault 44, thereby improving the sealing effect provided by the sealing member 46.

In order to construct a hose 10 with the end fitting 40, the following method may be used:
- The hose 10 is suitably cut back to receive the end fitting 40.
- The inner sleeve 42 is inserted within the hose inner portion 100.
- The seal activation collar 54 is inserted over the hose inner portion 100, underneath the outer portion 102.
- The sealing member 46 is inserted over the hose inner portion 100 to abut the surface 54a of the seal activation collar 54.
- The isolation ring 58 is inserted at the front of the internal sleeve 42.
- The assembly constructed so far is inserted into the external vault 44 of the end fitting.
- The seal activation collar 54 is secured to the external vault 44 using the bolts 56. This compresses and activates the seal of the sealing member 46.
- The hose clamp 48 is fitted adjacent to the seal activation collar 54. The individual segments of the hose clamp are assembled into a complete ring using the hose clamp assembly bolts 62. The hose clamp is then secured to the seal activation collar 54 using the clamp locking bolts 52.
- The hose outer portion 102 is separated into discrete bundles each of which is slotted though a respective one of the apertures 44c.
- The bundles of the hose outer portion 102 are wrapped (preferably, four times) around the pin 60.
- The bundles of the hose outer portion 102 are clamped between the retaining members 44d and 44e.
- Another end fitting 40 can be secured to the other end of the hose using the same procedure.

It will be appreciated that the invention described above may be modified within the scope of the following claims.

## Claims

1. An end fitting for a hose, the hose comprising an inner portion and an outer portion, the end fitting comprising: an inner sleeve adapted to be placed within the inner portion of the hose; an external vault adapted to extend around the outside of the inner portion of the hose; a hose clamp adapted to clamp the hose between the clamp and the sleeve; a sealing member adapted to provide a seal between the inner portion of the hose and the external vault; a seal activating member capable of being pressed against the sealing member to increase the sealing effect of the sealing member; and retaining means adapted to retain the outer portion of the hose; the arrangement being such that when an axial tension is applied to the outer portion of the hose, said outer portion can press against the seal activating member to press said seal activating member against the sealing member and thereby increase said sealing effect.

2. An end fitting according to claim 1, wherein the seal activating member is disposed between the hose clamp and the external vault.

3. An end fitting according to claim 1 or 2, wherein the seal activating member has a surface which is arranged such that the outer portion of the hose is arranged in contact with said surface, the arrangement being such that when an axial tension is applied to the outer portion of the hose, said outer hose portion presses against said surface to push the seal activating member into contact with the sealing member.

4. An end fitting according to claim 3, wherein said surface of the seal activating member is at an angle to the direction in which the seal activating member presses against the sealing member, said angle being from 30° to 60°.

5. An end fitting according to claim 1, 2, 3 or 4, wherein the retaining means includes an elongate support, around which the outer portion of the hose can be wound one or more times.

6. An end fitting according to any preceding claim, wherein the retaining means includes two retaining members adapted to retain part of the outer portion of hose therebetween.

7. An end fitting according to claim 6, wherein the retaining members have corrugated formations thereon which mate with one another to retain the outer portion of the hose between the corrugations.

8. A hose comprising a hollow elongate body adapted to convey fluids therethrough and an end fitting according to any one of the preceding claims disposed at each end of the body.

9. Hose according to claim 8, wherein the hose body comprises:
(i) an inner portion comprising an inner elongate supporting member arranged along the length of the hose, the supporting member having a plurality of coils arranged in a substantially helical configuration; a coil retaining means adapted to prevent coils of the supporting member from moving apart relative to one another; and a tubular reinforcing/sealing layer disposed around the supporting member and retaining means; and
(ii) an outer portion comprising a further reinforcing layer disposed around the underlying layers.

10. Hose according to claim 9, which has only one coiled supporting member.

11. Hose according to claim 9 or 10, wherein the coil retaining means comprises a retaining material which is secured to one coil of the supporting means and also secured to another, preferably adjacent, coil of the supporting means, the arrangement being such that the length of the retaining material between the coils is substantially the same as the desired spacing between the two coils, so that if a force is applied to move the coils apart, the retaining material prevents the coils moving apart.

12. Hose according to claim 9 or 10, wherein the coil retaining means comprises an elongate strip of retaining material arranged to follow the coils.

13. Hose according to claim 12, wherein the retaining material is folded around the coils, and the side edges of the retaining material are secured to a part of the retaining material that is folded around another coil of the coiled supporting member, whereby the two coils are prevented from moving apart relative to one another.

14. Hose according to any one of claims 9 to 13, wherein the tubular reinforcing/sealing layer preferably comprises a plurality of discrete layers.

15. Hose according to any one of claims 9 to 14, wherein the tubular reinforcing/sealing layer comprises a first reinforcing layer disposed around, and adjacent to, the supporting member and coil retaining means.

16. Hose according to claim 15, wherein the tubular reinforcing/sealing layer comprises a sealing layer disposed around, and adjacent to, the first reinforcing layer.

17. Hose according to claim 16, wherein the tubular reinforcing/sealing layer comprises a second reinforcing layer disposed around, and adjacent to, the sealing layer.

18. Hose according to claim 17, wherein the tubular reinforcing/sealing layer comprises a binding layer disposed around, and adjacent to, the second reinforcing layer.

19. Hose according to claim 18, wherein the tubular reinforcing/sealing layer comprises an insulating layer disposed around the underlying layers.

20. Hose according to claim 18 or 19, wherein the tubular reinforcing/sealing layer comprises a buoyancy layer disposed around the underlying layers.

21. Hose according to any one of claims 9 to 20, wherein the terminal ends of the outer layer are divided into distinct strands, which are each secured to a respective part of the retaining means of the end fitting.
